# EUROPEAN PATENT APPLICATION

(11) **EP 2 243 884 A1**
(43) Date of publication of application: **27.10.2010**
(21) Application number: 10003194.7
(22) Date of filing: 25.03.2010
(51) Int. Cl.: E03C 1/04, F16K 35/04

(54) **Safety device for taps**

(30) Priority: 16.04.2009 GB 0906531
(71) Applicant: Elliot, Ian, Ballybogey County Antrim Northern Ireland BT53 6TF (GB)
(72) Inventor: Elliot, Ian, Ballybogey County Antrim Northern Ireland BT53 6TF (GB)
(74) Representative: Waller, Stephen

(57) **Abstract**

A safety device for a tap or faucet, said device comprising an elongate member (10,110,210,310) adapted to extend between an operating handle (2) of a tap (1) and a portion of the body of the tap (1) to retain the operating handle (2) in its closed position, wherein a first end (12,112,212,316) of the elongate member is adapted to engage a portion of the spout of the tap and a second end (14,114,214,314) is adapted to engage a portion of the operating handle of the tap.

## Description

This invention relates to safety device for a tap or faucet, and in particular to a safety device for retaining a hot water tap in a closed position.

Most common hot water taps or faucets are easily turned on by adults and minors. Minors can easily get scalded by accidental/unsupervised turning on of a hot water dispensing tap, particularly if the minor is in a bath which the tap dispenses into. Hot bath water is responsible for the highest number of fatal and severe scalding injuries among young children (over 20 every year). Around 500 children, mainly under fives, are admitted to hospital every year with third degree burns. A further 2000 attend accident and emergency departments with lesser injuries (Child Accident Prevention Trust, January 2008)

Bath water can be delivered to taps at dangerously high temperatures - as much as 70°C.
Children are more susceptible to scalds due to their sensitive skin.
Over 45°C - Scalding can occur
At 50°C, - Children can suffer third degree burns in under two minutes.
At 60°C - Third degree burns in under 1.5 seconds.
At 70°C - Third degree burns after 0.27 seconds

According to the present invention there is provided a safety device for a tap or faucet, said device comprising an elongate member adapted to extend between an operating handle of a tap and a portion of the body of the tap to retain the operating handle in its closed position, wherein a first end of the elongate member is adapted to engage a portion of the spout of the tap and a second end is adapted to engage a portion of the operating handle of the tap.

Preferably at least a portion of said elongate member is formed from an elastic material whereby the device, in use, biases the operating towards its closed position.

The length of the elongate member may be adjustable to enable the distance between the first and second ends of the elongate member to be varied to allow the length of the device to be adjusted to suit different taps.

In one embodiment said elongate member may comprise a one piece elastic strap having a first aperture provided in said fist end to receive a portion of the spout and a second aperture provided in said second end to receive the a portion of the operating handle of the tap.

Preferably said second end is provided with a plurality of spaced apertures adapted to receive respective portions of the operating handle of the tap and/or to enable the device to be used with different sized taps. For example, each of said plurality of apertures may be adapted to receive a respective projection of the operating handle where the operating handle comprises a plurality of circumferentially spaced projections.

At least one end, preferably the second end of the elongate member, may be provided with an integrally formed tab to be pulled by the user to facilitate fitment and removal of the device from a tap. The tab may be provided with ribs to provide enhanced grip for the user.

In a further embodiment said elongate member may comprise a first part adapted to engage a portion of the spout of the tap and a second part adapted to engage a portion of the operating handle of the tap, said first and second parts being releasably connectable together by releasable fastening means to extend between the operating handle and spout to retain the operating handle in its closed position. Each of said first and second parts of the device may comprise at least one aperture, hook or ring for attaching the respective part to a respective portion of the tap.

Preferably at least a portion of at least one of the first and second parts is formed from an elastomeric material to provide a biasing force between said operating handle and spout when the first and second parts are connected together. At least one of said first and second parts may comprise an elastomeric ring for attachment to a respective part of the tap.

The releasable fastening means may comprise a hook provided on one of said first and second parts and a receiving aperture on the other of said first and second parts for receiving said hook. Alternatively the releasable fastening device may comprise a buckle or similar two part fastening means.

In a further embodiment the device may comprise an elongate strap having an attachment means mounted thereon whereby a distal end of the strap may be passed through the attachment means to create a loop which can be passed around a spout of a tap, a further portion of the device being attachable to an operating handle of the tap to retain the operating handle in its closed position.

Preferably said further portion comprises a hook or ring to be attached to said operating handle. Such hook or ring may be formed from an elastic material. Preferably said hook or ring is attached to said elongate strap adjacent said attachment means.

The device is intended to be applied to the tap by an adult when the tap is turned fully off. Once applied, the device will act as a locking mechanism, preventing the tap from being turned on until the device is removed from the tap (by an adult).

An embodiment of the present invention will now be described, by way of example only, with reference to the accompanying drawings, in which:-
Figure 1 is a perspective view of a tap safety device according to a first embodiment of the present invention;
Figure 2 is a perspective view of the tap safety device of Figure 1 fitted to a tap;
Figure 3 is a plan view of a tap safety device according to a second embodiment of the present invention;
Figure 4 is a perspective view of the tap safety device of Figure 3 fitted to a tap;
Figure 5 is a perspective view of the tap safety device of Figure 4 is a released configuration to allow the tap to be operated;
Figure 6 is a plan view of a tap safety device according to a third embodiment of the present invention;
Figure 7 is a perspective view of the tap safety device of Figure 6 fitted to a tap;
Figure 8 is a perspective view of a tap safety device according to a further embodiment of the present invention; and
Figure 9 is a perspective view of the device of Figure 8 in use.

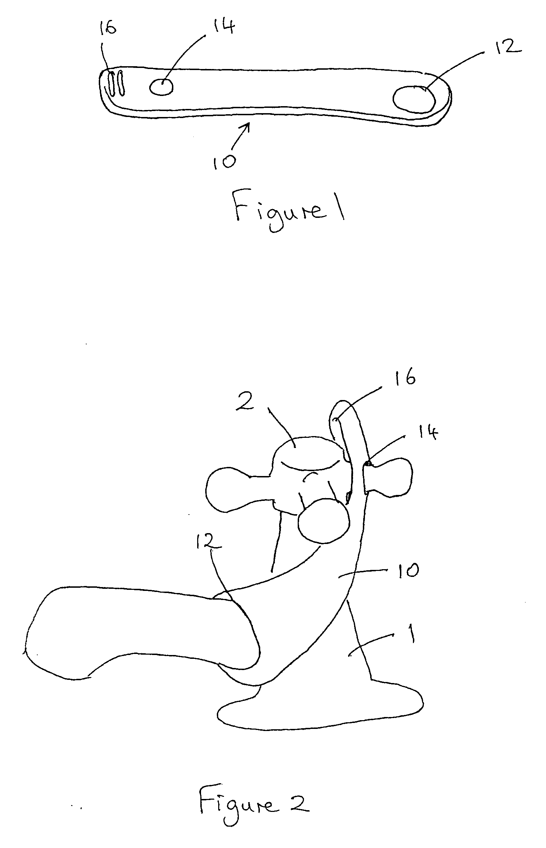

As shown in Figures 1 and 2, a tap locking device in accordance with a first embodiment of the present invention comprises an elongate strap 10 formed from an elastic material, such as rubber, in particular Polyurethane, Silicon rubber or a Thermoplastic elastomer. The strap may comprise a single piece moulding, moulded from a suitable polymeric material.

Each end of the strap 10 has a hole 12,14 in it, more specifically a first hole 12 provided in a first end of the strap and a smaller second hole 14 provided in a second end of the strap 10. The second end of the strap is also provided with a ribbed tab 16 at a distal end thereof to be used when fitting or removing the strap from a tap, as will be described below in more detail. The diameter of the second hole 14 is selected to be suitable to receive a prong or elongate region of an operating handle of the tap to which it is to be fitted. Similarly the diameter of the first hole 12 may be selected to be fitted over the spout of the tap to which it is to be fitted.

When the tap is in the fully off or closed position, the strap 10 is applied by fitting the first end with the large hole 12 over the spout of the tap 1, the ribbed tab 16 at the second end is then used to stretch the second end of the strap 10 around the back of the tap and the smaller second hole 14 is then placed over a prong on the tap head 2 (operating handle), as shown in Figure 2.

When fitted the elastic properties of the strap 10 will pull on the tap head/operating handle 2 in a way that will try to rotate the tap head 2 in a clockwise direction, towards its closed position. The force required to remove the strap 10, by virtue of the elasticity of the strap and its angle from being bent around the back of the tap 1, will be enough to prevent a minor having the ability to remove it.

When the tap 1 is needed for normal operation by an adult, the user grips and pulls the tab 16 to stretch the strap 10 and remove the second hole 14 from the prong of the tap head 2. The strap 10 can then hang from the spout. When finished with the tap, the adult will then stretch the strap 10 around the tap 1 and reapply the second hole 14 of the strap 10 over the prong of the tap head 2 to once again secure the tap in its closed position.

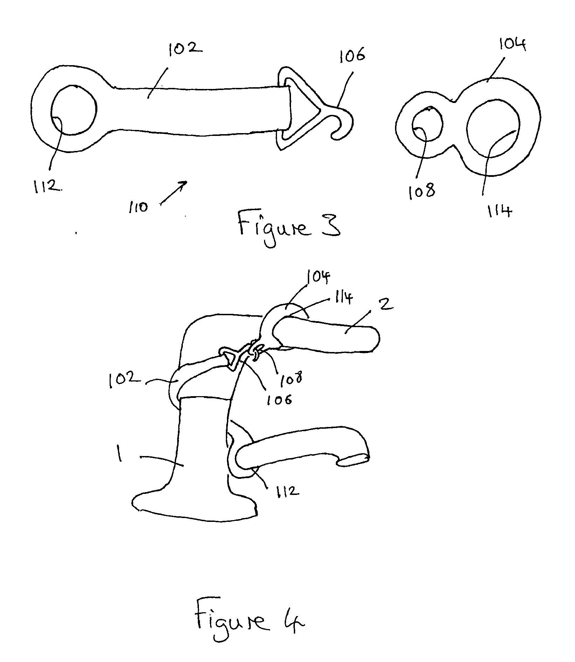

A tap locking device in accordance with a second embodiment of the present invention is shown in Figures 3 to 5.

The tap locking device is similar to that of the first embodiment. However, the elongate strap 110 is divided into two parts 102,104 joined together by a releasable fastening. The first part 102 of the strap 110 comprises an elongate elastomeric member having a hole 112 formed in one end for receiving the spout of a tap 1 and has a hook 106 at an opposite end. The hook 106 may be formed from metal and connected to the end of the first part 102 of the strap 110 by being inserted through a transverse sleeve or aperture formed in said end of the first part 102. Alternatively the first part 102 of the strap 110 may be overmoulded over a portion of the hook 106.

The second part 104 of the strap 110 comprises a moulded elastic member having a first hole 114 for receiving a portion of the operating handle 2 of the tap 1 and a second hole 108 for receiving the hook 106 of the first part 102.

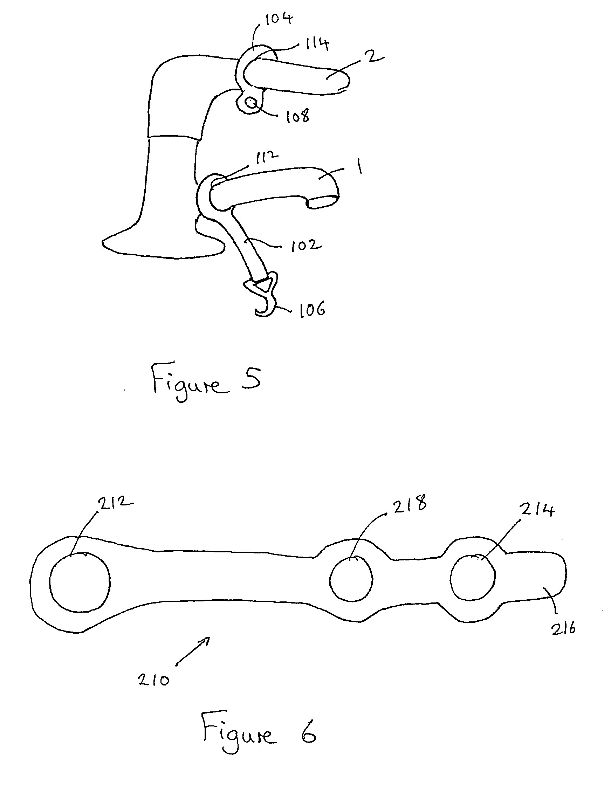

In use, the first part 102 of the strap 110 is attached to the tap 1 by passing the spout of the tap through the hole 112 in the first part 102. The second part 104 is attached to the operating handle by passing an elongate portion of the operating handle 2 through the first hole 114 of the second part 104. When it is desired to secure the tap 1 in its closed position, the first part 102 of the strap 110 is stretched and wrapped around the body of the tap 1 in the appropriate direction and the hook 106 is attached to the second hole 108 of the second part 104 of the strap 110 to bias the operating handle 2 of the tap 1 towards its closed position, as shown in Figure 4. When it is desired to operate the tap 1, the hook 106 of the first part 102 of the strap 110 is released from the second hole 108 of the second part 104 of the strap 110, as shown in Figure 5.

The hook 106 and hole 108 fastening arrangement may be replaced by any other suitable releasable fastening means, such as a simple plastic buckle of the type used on luggage. One or both of the parts of the strap may be formed from a woven strap material instead of a moulded elastic material. Sufficient elasticity may be provided by forming the tap attachment part of the second part of the device from a ring of elastomeric material attached to a fabric strap portion. Alternatively the strap may be entirely formed from a woven fabric material.

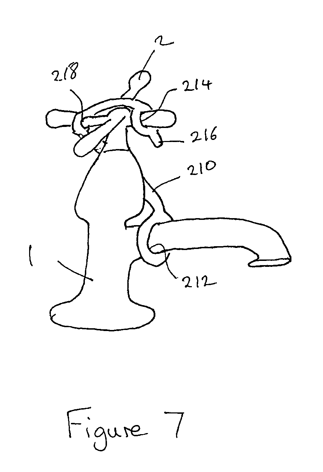

A tap locking device in accordance with a third embodiment of the present invention is shown in Figures 6 and 7. The third embodiment is a modification of the single piece strap of the first embodiment. The strap 210 again has a first hole 212 provided in a first end of the strap and a smaller second hole 214 provided in a second end of the strap 10. The second end of the strap is also provided with a ribbed tab 216 at a distal end thereof to be used when fitting or removing the strap from a tap, as will be described below in more detail. The diameter of the second hole 214 is selected to be suitable to receive a prong or elongate region of an operating handle of the tap to which it is to be fitted. Similarly the diameter of the first hole 212 is selected to be fitted over the spout of the tap to which it is to be fitted. A tab 216 is provided on a distal end of the strap 210 to assist fitment of the strap 210 to the operating handle 2 of a tap 1.

A further hole 218 is provided at a location spaced from the second hole 214 such that the second and further holes 214 and 214 can be fitted over respective prongs of a multi-pronged tap head, as shown in Figure 7, to reduce the strain on each individual hole 214,218 and thus reduce the risk of the strap breaking.

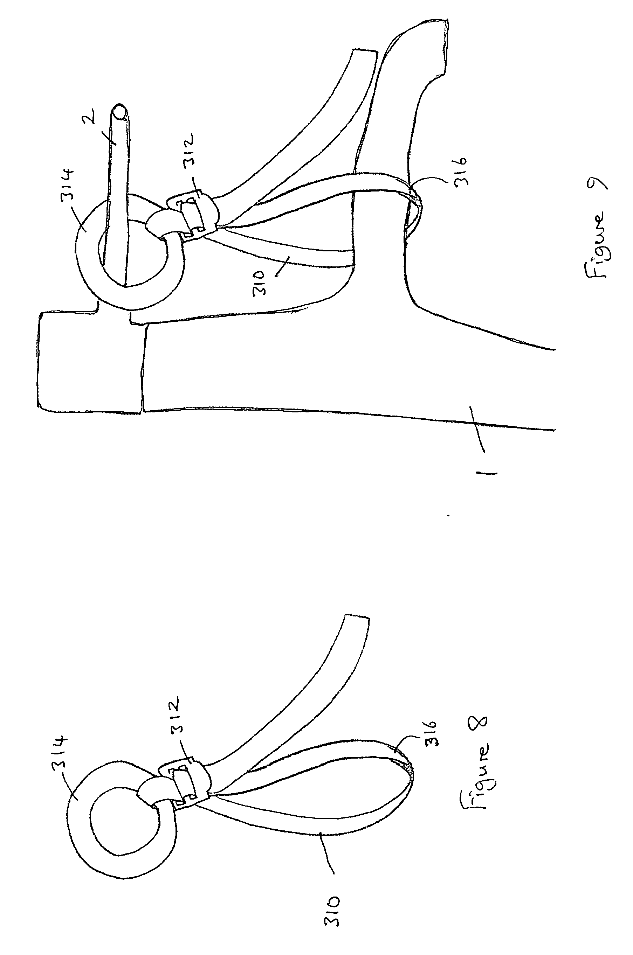

A tap locking device in accordance with a fourth embodiment of the present invention is illustrated in Figures 8 and 9. The device comprises an elongate strap 310 formed from a woven fabric material, a ladder lock buckle 312 being attached to the strap adjacent a first end whereby a second, free end of the strap 310 may be passed through the ladder lock buckle 312 to create a loop 316 in the strap 310 which can be placed around the spout of a tap 1 (as shown in Figure 9). An elastic ring 314 is attached to first end of the strap adjacent the ladder lock buckle 312 whereby the elastic ring 314 can receive a prong or other elongate region of an operating handle 2 of the tap 1.

In use, the loop portion 316 of the strap 310 is placed over the spout of a tap 1 and the elastic ring 314 is fitted to the operating handle 2 of the tap. The free end of the strap 310 can be pulled to reduce the size of the loop 316 and tighten the strap over the tap to bias the operating handle 2 of the tap 1 towards its closed position. The elastic ring 314 grips the operating handle 2 of the tap 1 and provides an elastic biasing force to hold the tap closed.

The invention is not limited to the embodiment(s) described herein but can be amended or modified without departing from the scope of the present invention.

## Claims

1. A safety device for a tap or faucet, said device comprising an elongate member (10,110,210,310) adapted to extend between an operating handle (2) of a tap (1) and a portion of the body of the tap (1) to retain the operating handle (2) in its closed position, wherein a first end (12,112,212,316) of the elongate member is adapted to engage a portion of the spout of the tap and a second end (14,114,214,314) is adapted to engage a portion of the operating handle of the tap.

2. A device as claimed in claim 1, wherein at least a portion of said elongate member is formed from an elastic material whereby the device, in use, biases the operating towards its closed position.

3. A device as claimed in any preceding claim, wherein the length of the elongate member is adjustable to enable the distance between the first and second ends of the elongate member to be varied to allow the length of the device to be adjusted to suit different taps.

4. A device as claimed in any preceding claim, wherein said elongate member comprises a one piece elastic strap (10,210) having a first aperture (12,212) provided in said fist end to receive a portion of the spout and a second aperture (14,214) provided in said second end to receive the a portion of the operating handle of the tap.

5. A device as claimed in claim 4, wherein said second end is provided with a plurality of spaced apertures (214,218) adapted to receive respective portions of the operating handle of the tap and/or to enable the device to be used with different sized taps.

6. A device as claimed in claim 4 or claim 5, wherein at least one end, preferably the second end of the elongate member, is provided with an integrally formed tab (16,216) to be pulled by the user to facilitate fitment and removal of the device from a tap.

7. A device as claimed in any of claims 1 to 3, wherein said elongate member comprises a first part (102) adapted to engage a portion of the spout of the tap and a second part (104) adapted to engage a portion of the operating handle of the tap, said first and second parts being releasably connectable together by releasable fastening means (106,108) to extend between the operating handle and spout to retain the operating handle in its closed position.

8. A device as claimed in claim 7, wherein each of said first and second parts of the device comprise at least one aperture, hook or ring (112,114) for attaching the respective part to a respective portion of the tap.

9. A device as claimed in claim 7 or claim 8, wherein at least a portion of at least one of the first and second parts is formed from an elastomeric material to provide a biasing force between said operating handle and spout when the first and second parts are connected together.

10. A device as claimed in claim 9, wherein at least one of said first and second parts comprises an elastomeric ring for attachment to a respective part of the tap.

11. A device as claimed in any of claims 8 to 10, wherein the releasable fastening means comprises a hook (106) provided on one of said first and second parts and a receiving aperture (108) on the other of said first and second parts for receiving said hook or where the releasable fastening device comprises a buckle or similar two part fastening means.

12. A device as claimed in any of claims 1 to 3, comprising an elongate strap (310) having an attachment means (312) mounted thereon whereby a distal end of the strap may be passed through the attachment means to create a loop (316) which can be passed around a spout of a tap (1), a further portion (314) of the device being attachable to an operating handle of the tap to retain the operating handle in its closed position.

13. A device as claimed in claim 13, wherein said further portion comprises a hook or ring (314) to be attached to said operating handle (2).

14. A device as claimed in claim 13, wherein said hook or ring (314) is formed from an elastic material.

15. A device as claimed in claim 13 or claim 14, wherein said hook or ring (314) is attached to said elongate strap (310) adjacent said attachment means (312).
